# EUROPÄISCHE PATENTSCHRIFT

(11) **EP 0 520 302 B1**
(45) Veröffentlichungstag und Bekanntmachung des Hinweises auf die Patenterteilung: **07.12.1994**
(21) Anmeldenummer: 92110175.4
(22) Anmeldetag: 17.06.1992
(51) Int. Cl.: B60S 1/08

(54) **Einrichtung zur Steuerung einer Scheibenwischanlage**
Arangement for controlling a windscreen wiping system
Dispositif de commande d'un système d'essuie-glaces

(30) Priorität: 24.06.1991 DE 4120750; 26.05.1992 DE 4217390
(43) Veröffentlichungstag der Anmeldung: 30.12.1992
(73) Patentinhaber: Leopold Kostal GmbH & Co. KG, 58507 Lüdenscheid (DE)
(72) Erfinder: Bendicks, Norbert, W-5870 Hemer (DE); Levers, Jürgen, W-4630 Bochum 7 (DE)

(56) Entgegenhaltungen:
- WO-A-89/06202
- WO-A-91/09756
- DE-A- 3 314 770
- US-A- 4 859 867

## Beschreibung

Die vorliegende Erfindung geht von einer gemäß dem Oberbegriff des Hauptanspruches konzipierten Einrichtung zur Steuerung einer Scheibenwischanlage aus.

Derartige Einrichtungen sind insbesondere dafür vorgesehen, um einen auf der Front- oder der Heckscheibe eines Kraftfahrzeuges vorhandenen flüssigen oder festen Belag qualitativ und quantitativ zu erfassen und in Abhängigkeit davon eine der Scheibe zugeordnete Scheibenwischanlage automatisch zu beeinflussen, d.h. dieselbe zur Reinigung der Scheibe insbesondere intervallmäßig in Betrieb zu setzen.

Durch die DE 33 14 770 C1 ist eine Einrichtung zum Steuern eines Scheibenwischermotors bekanntgeworden, die eine IR-optoelektronische Vorrichtung und eine einen I/U-Konverter, einen phasenselektiven Gleichrichter und einen Tiefpaßfilter aufweisende Schaltungsanordnung umfaßt. Diese Einrichtung ist jedoch so aufgebaut, daß die Strahlenintensität des bzw. der Strahlensender der optoelektronischen Vorrichtung konstant gehalten wird und der Konversionsfaktor des I/U-Konverters fest eingestellt ist. So kann die Schaltungsanordnung zwar auf die während des Wischbetriebes sich ändernden Meßbedingungen, wie z.B. verschmutzte Scheiben, Auftreffen von Regen bzw. Schnee oder Temperaturgang der optoelektronischen Vorrichtung einigermaßen zufriedenstellend automatisch so angepaßt werden, so daß der Antriebsmotor von der Schaltungsanrodnung sinnvolle Steuersignale erhält, aber nur weil sich diese Meßbedingungen in einem relativen kleinen Bereich verändern. Treten jedoch veränderte Meßbedingungen auf, wie z.B. beim Einsatz unterschiedlicher Scheibentypen, die sich in einem großen Bereich bewegen, so ist das automatische Erzeugen von sinnvollen Steuersignalen durch die Schaltungsanordnung nicht mehr möglich, was letztendlich dazu führt, daß die Scheibenwischanlage nicht mehr zufriedenstellend automatisch funktioniert. Weil die IR-Strahlenempfänger abhängig von den vorliegenden Umgebungslichtverhältnissen, zusätzlich dem von den IR-Strahlensendern abgegebenen IR-Nutzsignal jeweils einen Infrarotlichtanteil des Umgebungslichtes empfangen, wird dieser Anteil des Umgebungslichtes aus dem Gesamtsignal ausgekoppelt, damit ein grundsätzlich weiterverarbeitbares Signal vorliegt. Das Auskoppeln des IR-Umgebungslichtanteiles aus dem Gesamtsignal wird dabei durch einen phasenselektiven Gleichrichter bzw. durch eine kapazitive Auskoppelung bewirkt. Damit werden jedoch nicht alle störend auf das Nutzsignal einwirkenden Einflüsse des Umgebungslichtes ausgekoppelt.

Der vorliegenden Erfindung liegt deshalb die Aufgabe zugrunde, eine Einrichtung zur Steuerung einer Scheibenwischanlage zu schaffen, die sich automatisch auch auf in einem sehr großen Bereich verändernde Meßbedingungen, insbesondere auf die verschiedenen Dämpfungsfaktoren von unterschiedlichen Scheibentypen einstellt.

Erfindungsgemäß wird diese Aufgabe durch die im kennzeichnenden Teil des Hauptanspruches angegebenen Merkmale gelöst. Vorteilhaft bei einer derartigen Ausgestaltung einer Einrichtung zur Steuerung einer Scheibenwischanlage ist, daß die Einrichtung ohne manuellen Einstellaufwand den Scheiben von Kraftfahrzeugen zugeordnet werden kann. Somit sind erst die Voraussetzungen für einen serienmäßigen Einsatz in Kraftfahrzeugen geschaffen, weil dort solche Einrichtungen in großen Stückzahlen verbaut werden.

Außerdem ist es besonders vorteilhaft bei einer solchen Einrichtung um eine wirkungsvolle Umgebungslichtkompensation zu ermöglichen nicht nur den dem Umgebungslicht entsprechende IR-Umgebungslichtanteil aus dem Nutzsignal auszukoppeln, sondern auch andere eine störende Wirkung auf die Auswertung des IR-Nutzsignales habenden Störeinflüsse des Umgebungslichtes wirkungsvoll auszuschalten. Das wird, wie insbesondere aus dem Patentanspruch 8 hervorgeht, dadurch erreicht, daß der zumindest eine IR-Strahlenempfänger mit zumindest einem Arbeitswiderstand versehen ist und daß die durch den Umgebungslichtanteil an dem Arbeitswiderstand abfallende Spannung als Korrekturgröße für das Nutzsignal Verwendung findet. Somit können auch ständig in schneller Folge wechselnde Umgebungslichtverhältnisse, z.B. von Hell nach Dunkel, nicht zu einem ungewollten Auslösen der Scheibenwischanlage führen bzw. ein gewolltes Auslösen der Scheibenwischanlage wird verhindert.

Weitere vorteilhafte Ausgestaltungen des erfindungsgemäßen Gegenstandes sind in den Unteransprüchen angegeben und werden anhand eines in einem Blockschaltbild dargestellten Ausführungsbeispieles näher erläutert.

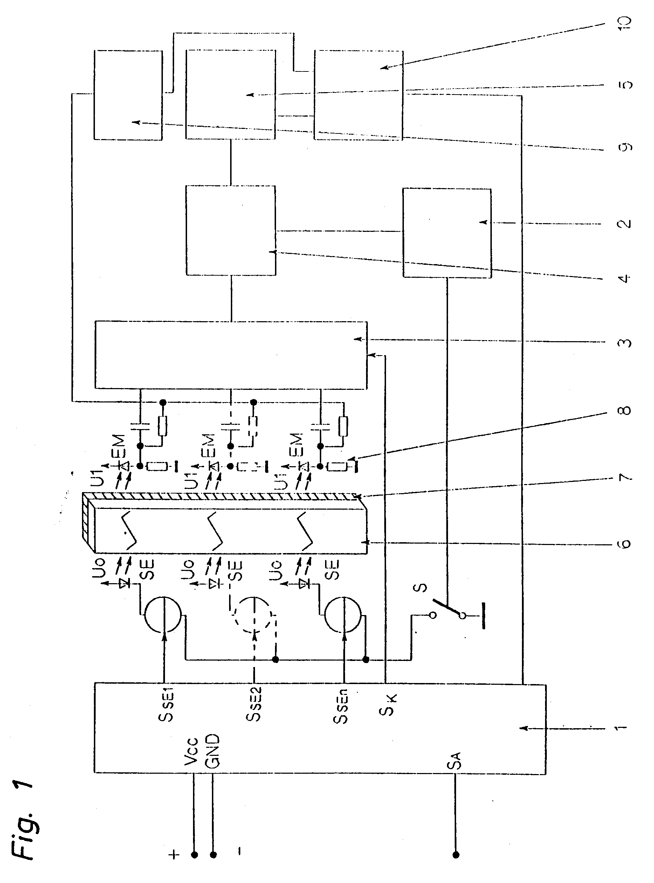

- Fig. 1: ein Blockschaltbild der Einrichtung zur Steuerung der Scheibenwischanlage
- Fig. 2: ein Diagramm zur Darstellung von Nutzsignal, Ausgangsspannung und Korrekturgröße.

Wie aus dem Blockschaltbild hervorgeht, besteht eine solche Einrichtung zur Steuerung einer Scheibenwischanlage hauptsächlich aus einer eine Steuerstufe 1, einer aus einem Schalter S und einem Taktgenerierer 2 bestehenden Taktgebereinheit, einem I/U-Konverter 3, einem phasenselektiven Gleichrichter 4 und einem Verstärker 5 mit Tiefpaß sowie einer mehrere IR-Strahlensender SE, einen Strahlenleitkörper 6 und mehrere Strahlenempfänger EM aufweisenden optoelektronischen Vorrichtung. Vorzugsweise ist dabei jedem IR-Strahlensender SE auf der Eingangsseite jeweils ein IR-Strahlenempfänger EM auf der Ausgangsseite zugeordnet.

Die Steuerstufe 1 der Schaltungsanordnung ist einerseits über ihre Eingänge Vcc und GND an die Spannungsversorgung und andererseits über ihren Steuerausgang SA an die Scheibenwischanlage eines Kraftfahrzeuges angeschlossen. Des weiteren wird über die Steuerausgänge S_{SE1} bis S_{SEn} der Steuerstufe 1 der Sendestrom Uo der IR-Strahlensender SE und über den Steuerausgang SK der Konversionsfaktor des I/U-Konverters 3 eingestellt.

Das am Ausgang der optischen Strecke austretende Licht besteht aus einem von den Strahlensendern SE herrührenden Nutzanteil (Nutzsignal) und einem durch Einkopplung von Fremdlichtquellen (Umgebungslicht) herrührenden Störanteil. Das von den als IR-LED's ausgebildeten Strahlensendern SE abgegebene Licht wird von als IR-Fotodioden ausgebildeten und an eine Spannungsquelle U₁ angeschlossenen Strahlenempfängern EM und einem zugeordneten Widerstand in eine elektrische Größe umgesetzt, die sich dann ebenfalls aus dem Nutzanteil (Nutzsignal) und dem Störanteil zusammensetzt. Diese erzeugte elektrische Größe ist zusätzlich von der Umgebungstemperatur abhängig, da der Wirkungsgrad sowohl der IR-LED's als auch der IR-Fotodioden temperaturabhängig ist. Dies führt zu einer Verfälschung des Meßergebnisses. Um diesen Temperatureffekt zu kompensieren wird der Sendestrom Uo der IR-LED's in Abhängigkeit der Temperatur von der Steuerstufe 1 so nachgeregelt, daß die Ausgangsgröße unabhängig von der Umgebungstemperatur wird.

Die so aufbereitete elektrische Größe wird den nachfolgenden Schaltungsteilen zugeführt, die benötigt werden, um den Nutzanteil vom Störanteil des als elektrische Größe vorliegenden Signales zu trennen und so den Signal/Störabstand möglichst groß zu halten.

Der Wechselanteil der elektrischen Größe wird durch den dynamisch an die Empfangsstufe angekoppelten I/U-Konverter 3 in eine Spannung umgesetzt. Über den Steuerausgang SK kann der Konversionsfaktor von außen vorgegeben, d.h. eingestellt werden. Diese I/U-Konverter-Stufe unterdrückt weitgehend Anteile von statischen Störlichtquellen.

Die weitere Signalverarbeitung des jetzt als Spannung vorliegenden Signales erfolgt durch den phasenselektiven Gleichrichter 4, der synchron zur durch den Schalter S und Taktgenerierer 2 erzeugten Taktung der als IR-LED's ausgebildeten Strahlensender SE arbeitet. Außer der Gleichrichtfunktion werden so Wechselstörsignale, die eine zur Taktung unterschiedliche Frequenz aufweisen, unterdrückt.

Eine weitere Stufe in der Signalaufbereitung bildet ein Verstärker 5 mit Tiefpaßverhalten. Der Tiefpaß glättet Signaländerungen, die durch extrem schnelle Umgebungslichtänderungen verursacht werden.

Das Ausgangssignal (die Ausgangsspannung) dieser als Tiefpaß filternd wirkenden, d.h. entsprechend ausgelegten Verstärkerstufe stellt letztendlich das Maß für den Benetzungsgrad der Scheibe 7 dar. Es wird von einem zur Schaltungsanordnung gehörigen Mikro-Prozessor eingelesen und zur Steuerung des Scheibenwischers eines Kraftfahrzeuges verwendet, wobei die optoelektronische Vorrichtung dem Wischfeld des Scheibenwischers zugeordnet ist. Außerdem übernimmt der Mikroprozessor die Sendestromsteuerung der als IR-LED's ausgebildeten Strahlensender SE sowie die Konversionsfaktorsteuerung des I/U-Konverters 3, damit eine automatische Anpassung der Einrichtung an durch verschiedene Scheibentypen hervorgerufene, stark unterschiedliche Meßbedingungen erfolgt. Die Anpassung ist dabei unbedingt notwendig, da der Dämpfungsfaktor der gesamten optischen Strecke sehr stark vom jeweiligen Scheibentyp (Klarglas, wärmedämmendes Glas ohne Bandsperrfilter, wärmedämmendes Glas mit Bandsperrfilter) abhängig ist. Die Schaltungsanordnung der Einrichtung wird durch diesen Anpassungsvorgang automatisch in ihren optimalen Arbeitsbereich gefahren. Die dabei ermittelten Einstellwerte werden in einem nicht flüchtigen Speicher der Schaltungsanordnung abgelegt und stehen so bei jeder weiteren Aktivierung der Einrichtung als Startwerte zur Verfügung, ohne daß eine erneute Anpassung vorgenommen werden muß.

In diesem Ausführungsbeispiel kann die Sendestromsteuerung der IR-LED's in einem Bereich von 16 dB in 16 Stufen a 1 dB für jeden der als IR-LED's ausgebildeten Strahlensender SE getrennt eingestellt werden. Die Konversionsfaktorsteuerung des I/U-Konverters 3 kann in einem Bereich von 50 dB in 5 Stufen a 10 B eingestellt werden. Durch die vorbeschriebenen Maßnahmen kann ein lückenloser Einstellbereich von 65 dB in 1 dB Stufen zur automatischen Anpassung der Einrichtung durchfahren werden.

Durch das Überlappen der Einstellbereiche können des weiteren auch Bauteiltoleranzen ausgeglichen werden.

Weiterhin wird der Überlappungsbereich in Verbindung mit der für die Strahlensender SE getrennt gehaltenen Einstellmöglichkeit dazu genutzt, um einen Empfindlichkeitsabgleich zwischen den jeweils aus einem IR-LED und einer IR-Fotodiode bestehenden optischen Strecken durchzuführen, da nur das Summensignal der optischen Strecken vom I/U-Konverter 3 umgesetzt wird. Dieser Abgleich ist notwendig, damit die Empfindlichkeit der optischen Strecken untereinander identisch ist.

Im einzelnen können durch die Sendestromsteuerung der Strahlensender SE und durch die Konversionsfaktorsteuerung des I/U-Konverters 3 folgende Effekte ausgeregelt werden:
1.) unterschiedliche Scheibentypen (Wärmedämmglas, Klarglas)
2.) Fertigungstoleranzen der Sende- und Empfängerdioden
3.) Toleranzen in der Ansteuer- und Auswertelektronik
4.) Toleranzen im Strahlenleitkörper 6
5.) Alterungseffekte der Sende- und Empfangsdioden
6.) Alterungseffekte der Scheibe 7 (z.B. Kratzer durch Steinschlag).

Vorteilhafterweise werden die IR-Strahlensender SE der optoelektronischen Vorrichtung mit einem Strom einer Frequenz > 2 KHz gepulst betrieben. Durch diese Modulation entsteht ein Nutzsignal in Form eines Wechselsignales, welches zur Auswertung der auf der Scheibe 7 vorliegenden Verhältnisse den IR-Strahlenempfänger EM über den Strahlenleitkörper 6 zugeführt wird. Zusätzlich zu dem eigentlichen Nutzsignal empfangen die IR-Strahlenempfänger EM jedoch auch die Infrarotlichtanteile des Umgebungslichtes. Diese Infrarotlichtanteile stellen sich als ein dem Nutzsignal überlagerter Strom dar. Durch bekannte Schaltungen, wie z.B. phasenselektive Gleichrichter 4, kapazitive Auskopplung u.ä. kann der überlagerte Strom vom Nutzsignal getrennt werden. Jedoch sind damit keineswegs alle durch das Umgebungslicht störend auf das Nutzsignal einwirkende Einflüsse ausgeschaltet.

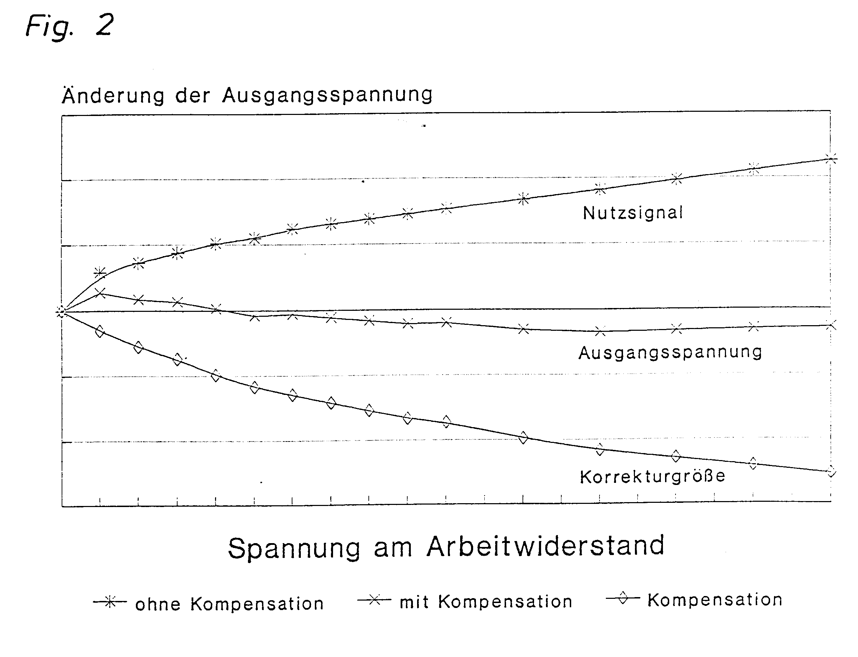

Wie insbesondere aus der Fig. 2 hervorgeht, weisen die IR-Strahlenempfänger EM eine nichtlineare Kennlinie auf. Wird die Leistung der IR-Strahlensender SE konstant gehalten, so ergibt sich zwangsläufig eine Nichtliniarität des Nutzsignales der IR-Strahlenempfängern EM, liegen unterschiedliche Umgebungslichtverhältnisse vor.

Durch diese nicht gewünschten Einflüsse des Umgebungslichtes kann es insbesondere bei ständig schnell wechselnden Umgebungslichtverhältnissen, wie z.B. bei einer Fahrt durch eine Baumallee (Wechselspiel Hell/Dunkel) zu Effekten in der optoelektronischen Vorrichtung kommen die zu einem ungewollten Auslösen der Scheibenwischanlage führen. Um diese ungewollten Ungebungslichteinflüsse auf die optoelektronische Vorrichtung auszuschalten, wird die an den Arbeitswiderständen 8 der IR-Strahlenempfänger EM abfallende Spannung, als Korrekturgröße für den Betrieb der Scheibenwischanlage herangezogen. Mit dieser Korrektur wird z.B. auch verhindert, daß die Ausgangsspannung aufgrund von Umgebungslichteinflüssen unter einen sogenannten Störpegel der Sensorvorrichtung abgleitet. Der Störpegel stellt dabei die Schwelle dar, ab der mit großer Wahrscheinlichkeit Signalveränderungen als ein auf der Scheibe 7 befindlicher Belag auszuwerten sind. Die Linearisierung des Nutzsignales (Bildung der Ausgangsspannung) wird im einzelnen dadurch erreicht, weil dem IR-Strahlenempfänger EM zur Aufbereitung der an dem Arbeitswiderstand 8 abfallende Spannung zu einer Korrekturgröße ein erster Operationsverstärker 9 zugeordnet ist. Außerdem ist nach dem Verstärker 5 mit Tiefpaß ein zweiter Operationsverstärker 10 vorhanden, dem als Eingangsgrößen einerseits das hinter dem Verstärker 5 mit Tiefpaß anliegende Nutzsignal und andererseits die aufbereitete Korrekturgröße zugeleitet werden. Der zweite Operationsverstärker 10 beseitigt die vom Umgebungslicht hervorgerufenen Veränderungen des Nutzsignales durch das Einspeisen der Korrekturgröße und es kommt somit zur Bildung der in die Steuerstufe 1 einzulesenden Ausgangsspannung. Somit liegt hinter dem Operationsverstärker 10 eine durch die Korrekturgröße linearisierte Ausgangsspannung an. Aus dem Umgebungslicht herrührende Einflüsse auf das Nutzsignal sind somit wirkungsvoll ausgeschaltet.

## Patentansprüche

1. Einrichtung zur Steuerung einer Scheibenwischanlage mit einem Antriebsmotor für mindestens einen Scheibenwischarm zur Reinigung der Außenfläche einer Scheibe (7), mit einer im Wischbereich auf der Innenfläche der Scheibe (7) angeordneten, aus zumindest einem Strahlensender (SE) und zumindest einem Strahlenempfänger (EM) bestehenden optoelektronischen Vorrichtung und mit einer mit der optoelektronischen Vorrichtung und dem Antriebsmotor verbundenen Schaltungsanordnung, wobei die in getakteter Form abgegebenen Strahlen zwischen dem Strahlensender (SE) und dem Strahlenempfänger (EM) durch einen flüssigen oder festen Belag auf der Scheibe (7) beeinflußt und damit die vom Strahlenempfänger (EM) abgegebenen Signale in Abhängigkeit von dem auf der Scheibe (7) vorhandenen Belag verändert und diese Signale von der im wesentlichen aus einem den Wechselanteil des Empfängersignales verstärkenden, zumindest einem I/U-Konverter (3), einem den getakteten Anteil des Ausgangssignales des I/U-Konverters (3) schmalbandig filternden und richtenden phasenselektiven Gleichrichter (4) und die Störgrößen der Schaltungsbauteile ausfilternden Tiefpaßfilter bestehenden Schaltungsanordnung zu Steuersignalen umgeformt werden, durch die der Betrieb des Antriebsmotors beeinflußt wird,
**dadurch gekennzeichnet**, daß die Schaltungsanordnung der Scheibenwischanlage eine mit einem im wesentlichen von der optoelektronischen Vorrichtung bei optimal sauberer Scheibe (7) bestimmten, die quasi statischen Verhältnisse der für die Erfassung des auf der Scheibe (7) befindlichen Belags vorgesehenen Bauelemente repräsentierenden Grundeinstellwert versehene Steuerstufe (1) aufweist, welche dem zumindest einen I/U-Konverter (3) zwecks Einstellung des Konversionsfaktors zugeordnet ist und daß der Grundeinstellwert in einem nicht flüchtigen Speicher der Schaltungsanordnung abgelegt und als Startwert für alle nachfolgenden Inbetriebnahmen der Scheibenwischanlage herangezogen ist.

2. Einrichtung zur Steuerung einer Scheibenwischanlage nach Anspruch 1, dadurch gekennzeichnet, daß die Steuerstufe (1) sowohl dem zumindest einen I/U-Konverter (3) zwecks Einstellung des Konversionsfaktors als auch dem zumindest einen Strahlensender (SE) zwecks Einstellung des Sendestroms (Uo) zugeordnet ist.

3. Einrichtung zur Steuerung einer Scheibenwischanlage nach einem der Ansprüche 1 bis 2, dadurch gekennzeichnet, daß für die Sendestrom-Einstellung eine Amplitudensteuerung vorgesehen ist.

4. Einrichtung zur Steuerung einer Scheibenwischanlage nach einem der Ansprüche 1 bis 3, dadurch gekennzeichnet, daß die Sendestrom-Einstellung des bzw. der Strahlensender(s) (SE) im Bereich von 1 bis 20 dB in Stufen von je 1 dB und die Einstellung des Konversionsfaktors des I/U-Konverters (3) im Bereich von 10 bis 80 dB in Stufen von je 10 dB vornehmbar ist.

5. Einrichtung zur Steuerung einer Scheibenwischanlage nach einem der Ansprüche 1 bis 4, dadurch gekennzeichnet, daß jedem Strahlensender (SE) einer aus mehreren Strahlensendern (SE) und Strahlenempfängern (EM) bestehenden optoelektronischen Vorrichtung eine getrennt zu beeinflussende Sendestrom-Einstellung zugeordnet ist.

6. Einrichtung zur Steuerung einer Scheibenwischanlage nach einem der Ansprüche 1 bis 5, dadurch gekennzeichnet, daß der bzw. die Strahlensender (SE) im wesentlichen aus (jeweils) einer IR-LED besteh(t/en).

7. Einrichtung zur Steuerung einer Scheibenwischanlage nach einem der Ansprüche 1 bis 6, dadurch gekennzeichnet, daß der bzw. die Strahlenempfänger (EM) im wesentlichn aus (jeweils) einer IR-Fotodiode besteh(t/en).

8. Einrichtung zur Steuerung einer Scheibenwischanlage nach Anspruch 1, dadurch gekennzeichnet, daß der zumindest eine IR-Strahlenempfänger (EM) mit zumindest einem Arbeitswiderstand (8) versehen ist und daß die durch den Umgebungslichtanteil an dem Arbeitswiderstand (8) abfallende Spannung als Korrekturgröße für das Nutzsignal Verwendung findet.

9. Einrichtung zur Steuerung einer Scheibenwischanlage nach Anspruch 8, dadurch gekennzeichnet, daß die nach dem Verstärker (5) mit Tiefpaß anliegende, in die Steuerstufe (1) eingelesene, das Nutzsignal darstellende Ausgangsspannung mit der am Arbeitswiderstand (8) abfallenden, zur Korrekturgröße aufbereiteten Spannung in der Steuerstufe (1) beaufschlagt ist.

10. Einrichtung zur Steuerung einer Scheibenwischanlage nach Anspruch 8, dadurch gekennzeichnet, daß dem IR-Strahlenempfänger (EM) zur Aufbereitung der am Arbeitswiderstand (8) als Korrekturgröße abfallenden Spannung ein erster Operationsverstärker (9) zugeordnet ist und daß nach dem Verstärker (5) mit Tiefpaß ein zweiter Operationsverstärker (10) vorhanden ist, dem als Eingangsgrößen einerseits das hinter dem Verstärker (5) mit Tiefpaß anliegende Nutzsignal und andererseits die Korrekturgröße zugeleitet sind, wobei von dem zweiten Operationsverstärker (10) die vom Umgebungslicht hervorgerufenen Veränderungen des Nutzsignales durch die Korrekturgröße beseitigt werden und es somit zur Bildung der in die Steuerstufe (1) einzulesenden Ausgangsspannung kommt.

## Claims

1. A device for controlling a screen wiping system comprising a drive motor for driving at least one screen wiper arm for cleaning the outer surface of a screen (7), an optoelectronic apparatus disposed at the wiped area on the inner surface of the screen (7) and including at least one beam transmitter (SE) and at least one beam receiver (EM), and a circuit arrangement connected to the optoelectronic apparatus and the drive motor with the beams which are emitted from the at least one beam transmitter (SE) in clocked form being modified between the beam transmitter (SE) and the beam receiver (EM) by coating on the screen (7) so that the signals issued by the beam receiver (EM) are varied in dependence upon the coating present on the screen (7) and said signals being converted into control signals by the circuit arrangement, which includes at least one I/V converter (3) which amplifies the alternating current of the received signal, a phase-selective rectifier which acts as a narrow-band filter and rectifies the clocked component of the output signal of the I/V converter (3), and a low-pass filter which receives the output from the phase-selective rectifier and filters out the interference quantities of the circuit components of the device, the filtered output being converted into control signals by means of which operation of the drive motor is determined, wherein the circuit arrangement of the screen wiping system further comprises a control stage (1) which is associated with the at least one I/V converter (3) for the purpose of setting the conversion factor and which is provided with a basic setting value, which is substantially determined by the optoelectronic apparatus when the screen (7) is optimally clean and represents quasi-static conditions of the components of the device provided for detecting the coating present on the screen (7), and the basic setting value is stored in a non-volatile memory of the circuit arrangement and is used as a starting value for all subsequent startups of the screen wiping system.

2. The device for controlling a screen wiping system as claimed in claim 1, wherein the control stage (1) is associated both with the at least one I/V converter (3) for the purpose of setting the conversion factor and with the at least one beam transmitter (SE) for the purpose of setting the transmitting current (UO).

3. The device for controlling a screen wiping system as claimed in claim 1 or claim 2, wherein amplitude control is provided for setting the transmitting current.

4. The device for controlling a screen wiping system as claimed in any of claims 1 to 3, wherein the transmitting current setting of the at least one beam transmitter (SE) is effected in the range of 1 to 20 dB in stages each of 1 dB and the setting of the conversion factor of the I/V converter (3) is effected in the range of 10 to 80 dB in stages each of 10dB.

5. The device for controlling a screen wiping system as claimed in any of claims 1 to 4, wherein each beam transmitter (SE) of an optoelectronic apparatus consisting of several beam transmitters (SE) and several beam receivers (EM) has a transmitting current setting assigned to it which may be influenced independently.

6. The device for controlling a screen wiping system as claimed in any of claims 1-5, wherein each beam transmitter (SE) consists primarily of an IR-LED.

7. The device for controlling a screen wiping system as claimed in any of claims 1-6, wherein each beam receiver (EM) consists primarily of an IR-LED.

8. The device for controlling a screen wiping system as claimed in claim 1, wherein the at least one IR beam receiver (EM) is provided with at least one load resistor (8), and the voltage drop at the at least one load resistor caused by the ambient light received by the at least one beam receiver(EM) is used as a correcting quantity for the useful signal.

9. The device for controlling a screen wiping system as claimed in claim 8, wherein the output voltage representing the useful signal which is present after passing through the amplifier (5) with low-pass characteristic and which is supplied to the control stage (1), is combined in the control stage (1) with the voltage which drops at the load resistor (8) and which is processed into a correcting quantity.

10. The apparatus of claim 8, wherein a first operational amplifier (9) is associated with the IR beam receiver (EM) for processing the voltage drop at the least one load resistor (8) into the correcting quantity, and wherein following the amplifier (5) with low-pass characteristic a second operational amplifier (10) is provided, the processed useful signal and the correcting quantity being supplied to the second operational amplifier (10), the second operational amplifier (10) by means of the correcting quantity eliminating the variations in the processed useful signal caused by the ambient light and providing a control signal to the control stage.

## Revendications

1. Dispositif de commande pour un système d'essuie-glaces avec un moteur d'entraînement pour au moins un bras d'essuie-glace pour le nettoyage de la surface extérieure d'une glace, avec un dispositif opto-électronique, qui est disposé sur la surface intérieure de la glace, dans la zone d'essuyage et comprend au moins un émetteur de rayons et au moins un capteur de rayons, et avec un agencement de connexion, qui est raccordé au dispositif opto-électronique et au moteur d'entraînement, les rayons échangés, de façon ryhtmée, entre l'émetteur et le capteur de rayons étant influencés par un liquide ou une substance solide se trouvant sur la glace et les signaux, lancés par le capteur de rayons étant, de ce fait, modifiés, en fonction du liquide ou de la substance qui couvre glace, et convertis en signaux de commande par l'agencement de connexion qui est composé essentiellement d'au moins un convertisseur I/U, qui amplifie la part de courant alternatif du signal du capteur, d'un redresseur sélectif de phases, qui redresse et filtre, à bande étroite, la part rythmée du signal de sortie du convertisseur I/U, et d'un filtre passe-bas, qui filtre les grandeurs parasites des éléments de connexion, ces signaux de commande influençant le fonctionnement du moteur d'entraînement,
caractérisé en ce que
l'agencement de connexion du système d'essuie-glaces présente une unité de commande (1), qui est pourvue d'une valeur de réglage de base déterminée par le dispositif opto-électronique en cas de propreté optimale de la glace (7) et représentant les conditions quasiment statiques des éléments de construction prévus pour la détection de substance se trouvant sur la vitre (7), cette unité de commande (1) étant coordonnée à au moins un convertisseur I/U (3) aux fins de réglage du facteur de conversion, et que la valeur de réglage de base est mémorisée dans une mémoire non volatile de l'agencement de connexion et prise comme valeur de départ pour toutes les mises en service du système d'essuie-glaces suivantes.

2. Dispositif de commande pour un système d'essuie-glaces selon la revendication 1,
caractérisé en ce que
l'unité de commande (1) est coordonnée aussi bien à, au moins, un convertisseur I/U (3), aux fins de réglage du facteur de conversion, qu'à, au moins, un émetteur de rayons (SE), aux fins de réglage du coucourant d'émission (Uo).

3. Dispositif de commande pour un système d'essuie-glaces selon l'une des revendications 1 ou 2,
caractérisé en ce que
une commande d'amplitude est prévue pour le réglage du courant d'émission.

4. Dispositif de commande pour un système d'essuie-glaces selon l'une des revendications 1 à 3,
caractérisé en ce que
le réglage du courant d'émission du/des émetteur/s de rayons (SE) peut être effectué dans une plage de 1 à 20 dB en échelons de 1 dB chacun et le réglage du facteur de conversion du convertisseur I/U (3) dans une plage de 10 à 80 dB en échelons de 10 dB chacun.

5. Dispositif de commande pour un système d'essuie-glaces selon l'une des revendications 1 à 4,
caractérisé en ce que
un réglage du courant d'émission, influençable séparément, est coordonné à chaque émetteur de rayons (SE) d'un dispositif opto-électronique composé de plusieurs émetteurs de rayons (SE) et de plusieurs capteurs de rayons (EM).

6. Dispositif de commande pour un système d'essuie-glaces selon l'une des revendications 1 à 5,
caractérisé en ce que
le/les émetteur/s de rayons (SE) consiste/nt essentiellement (chacun) en une DEL IR.

7. Dispositif de commande pour un système d'essuie-glaces selon l'une des revendications 1 à 6,
caractérisé en ce que
le/les capteur/s de rayons (EM) consiste/nt (chacun) essentiellement en une photodiode IR.

8. Dispositif de commande pour un système d'essuie-glaces selon la revendication 1,
caractérisé en ce que
au moins un capteur de rayons IR (EM) est équipé d'au moins une résistance de charge (8) et que la tension, tombant à la résistance de charge (8) en raison de la part de lumière ambiante est utilisée comme grandeur de correction pour le signal utile.

9. Dispositif de commande pour un système d'essuie-glaces selon la revendication 8,
caractérisé en ce que
la tension de sortie présente en aval de l'amplificateur (5) avec passe-bas, lue dans l'unité de commande (1) et représentant le signal utile, est soumise à la tension tombant à la résistance de charge (8) et traitée en grandeur de correction.

10. Dispositif de commande pour un système d'essuie-glaces selon la revendication 8,
caractérisé en ce que
un premier amplicateur opérationnel (9) est coordonné au capteur de rayons IR (EM) pour le traitement de la tension tombant à la résistance de charge (8) en tant que grandeur de correction et qu'en aval de l'amplificateur (5) avec passe-bas, un deuxième amplificateur opérationnel (10) est prévu, auquel, d'une part, le signal utile, présent derrière l'amplificateur (5) avec passe-bas, et, d'autre part, la grandeur de correction sont conduits, les modifications du signal utile provoquées par la lumière ambiante étant éliminées du deuxième amplificateur opérationnel (10) par la grandeur de correction, ce qui conduit à la formation de la tension de sortie qui est lue dans l'unité de commande (1).
